# EUROPEAN PATENT APPLICATION

(11) **EP 3 975 026 A1**
(43) Date of publication of application: **30.03.2022**
(21) Application number: 21198637.7
(22) Date of filing: 23.09.2021
(51) Int. Cl.: G06F 21/62, G06Q 10/06

(54) **METHOD AND SYSTEM FOR MANAGING ASSET DATA IN AN INDUSTRIAL NETWORK**

(30) Priority: 28.09.2020 IN 202041041971
(71) Applicant: Siemens Aktiengesellschaft, 80333 München (DE)
(72) Inventor: BHAVE, Neha, 422009 Nashik (IN); PATWARDHAN, Ajit, 422005 Nashik (IN); SONGADWALA, Hemant, 422013 Nashik (IN)
(74) Representative: Horn Kleimann Waitzhofer Patentanwälte PartG mbB

(57) **Abstract**

A method and system for managing asset data in an industrial network (100) is disclosed. The method includes receiving a request for generating a two-dimensional asset data block from one or more user devices (108A-N). The request comprises asset data associated with an asset in an industrial network (100). Further, the method includes authenticating the one or more user devices (108A-N) based on predefined criteria stored in a database (206). The method further includes processing the received asset data based on time value and a space value associated with the asset data. Additionally, the method includes generating a two-dimensional asset data block comprising a chain of the processed asset data blocks each linked across a time axis and a tree of the processed asset data blocks each linked across a space axis.

## Description

The present invention relates to block chain systems and more particularly relates to a method and system for managing asset data in an industrial network.

A product lifecycle management system involves various users handling asset data, such as product data, at various stages. For example, through the entire process of product lifecycle management, there would require involvement of customers of asset, asset owners, third parties to access and manage the asset data. There is a dependency on various types of users while handling such asset data. Handling of such asset data is therefore a complex process. Any product lifecycle management system would require multiple users to access and process the asset data on need basis. These multiple users store the accessed and processed asset data at various databases either locally on their systems or in a centralized server. Hence, when a user would like to trace the asset data, there is a dependency on the various databases used for storing by the multiple users. Therefore, traceability of asset data is another major concern of product lifecycle management system. Further, since the asset data is handled by multiple users, there is a threat to asset data loss and mismanagement of asset data. Therefore, it is important to consider the security of asset data while being handled across multiple users. Consistency of asset data is another aspect, where the asset data used by any of the multiple users must be up to date and consistent across the various databases.

In light of above, there is a need for an improved method and system for managing asset data in an industrial network.

Therefore, it is an object of the present invention to provide a method and system for managing asset data in an industrial network.

The object of the present invention is achieved by a method for managing asset data in an industrial network. The method comprises receiving a request for generating a two-dimensional asset data block from one or more user devices. The request comprises asset data associated with an asset in an industrial network. In an embodiment, asset(s) may include products, systems, components or services, servers, robots, switches, automation devices, programmable logic controllers (PLC)s, human machine interfaces (HMIs), motors, valves, pumps, actuators, sensors and other industrial equipment(s). In an embodiment, the asset data associated with an asset comprises test reports/certificates, component data, serial numbers, type numbers, approvals, manufacturing information, specifications, versions, time-stamps & signatures, third party approvals/tests, vendor/sub-vendor information, commercial information. The industrial network comprises a trusted backbone comprised by a plurality of trusted user devices. A trusted user device may be located in one or more areas, such as one or more safe rooms, that can be secured with physical access controls, and/or that is only accessible to trusted operators of the industrial network.

The asset data block comprises hash value, asset data and time stamp value, information associated with the originator of the block and digital signature. In an embodiment, an originator is a person initiated the creation of the asset block. Specifically, the asset data block comprises one or more of the confirmed transactions, a hash value of the confirmed transactions comprised by the block and a reference value referring back to a previous block, thereby forming chain of asset data blocks or a tree of asset data blocks. The reference value referring back to the previous block may be a hash value of the entire asset data comprised by the previous block. The hash value of the confirmed transactions comprised by the block may be a hash value or Merkle root of a Merkle tree of hash values of each confirmed transaction comprised by the block.

The method comprises authenticating the one or more user devices based on predefined criteria stored in a database. The predefined criteria comprises privileges based on users roles and responsibility. e.g. Manufacturer will be entitled to create or modify data related to manufactured product, Customer will create data related to approvals, and the like. In an embodiment, the database may correspond to a blockchain ledger.

The method comprises processing the received asset data based on a time value and a space value associated with the asset data. The time value of the asset data indicates the time instance at which the asset data is processed and the space value of the asset data indicates hierarchical relationship of the asset data with the one or more pre-stored asset data. In an embodiment, the time value may correspond to time stamp value at which asset data is created or modified. In an embodiment, the space value may correspond to hierarchical level and position of asset data. Each hierarchical level and position of nodes in the tree are classified based on the type of content of the asset data block. For example, the hierarchical level may be 0 to N, where 0 being the bottom most level in the hierarchy and N being the top most level. The space value indicates the hierarchical level value, for example between 0 to N. The pre-stored asset data comprises asset data stored in the database, for example data structure, hierarchical level and position, data type such as predefined component types.

The method comprises generating a two-dimensional asset data block comprising a chain of the processed asset data blocks each linked across a time axis and a tree of the processed asset data blocks each linked across a space axis. In an embodiment, the tree of the processed asset data blocks are linked also across the time axis. In an embodiment, the two-dimensional asset data blocks comprises a time dimension and a space dimension. The time dimension comprises asset data blocks linked with each other on the time axis-for example Z axes. The space dimension comprises asset data blocks linked with each other on the space axis-for example X and Y axes.

In authenticating the one or more user devices based on predefined criteria stored in the database, the method comprises determining one or more privileges associated with a user of the one or more user devices requesting to generate the two-dimensional asset blocks. The one or more privileges comprises privileges based on users roles and responsibility. e.g. Manufacturer will be entitled to create or modify data related to manufactured product, Customer will create data related to approvals, and the like. For example, privileges may comprise create data block, modify data block, read data block, approve data block. Further, the method comprises authenticating the user of the one or more user devices based on the determined one or more privileges associated with the user of the one or more user devices. Each user of the one or more user devices are allowed to access specific hierarchical level of nodes based on the privileges associated with the user of the one or more user devices.

In processing the received asset data based on time value and a space value associated with the asset data, the method comprises encrypting the received asset data using a hash function and storing the encrypted asset data in a database. In an embodiment, encryption can be based on any known encryption mechanisms in the art. A hash function may be any encryption algorithm for data security and trusted connection of asset data blocks can be used such as hash function.

In processing the received asset data based on the time value and the space value associated with the asset data, the method comprises dynamically linking the asset data to one or more pre-stored asset data based on the time value associated with the asset data and the space value associated with the asset data.

In dynamically linking the asset data to one or more pre-stored asset data based on the time value associated with the asset data and the space value associated with the asset data, the method comprises determining whether the asset data received in the request is present as at least one prestored asset data block in the database. Further, the method comprises determining one or more modifications made to the asset data received in the request by comparing the asset data received in the request with corresponding pre-stored asset data block, if the asset data received in the request is present as the at least one pre-stored asset data block in the database. The one or more modifications comprises replacement of component having serial number A by serial number Al and changing corresponding asset data block and tree structure. Another modification comprises change of software version of a controller module from 1.0 to 1.1 and changing corresponding asset data block and tree structure. Further, the method comprises generating a modified asset data block based on the determined one or more modifications. The method comprises determining the time value and the space value of the modified asset data block. Additionally, the method comprises dynamically linking the modified asset data block to the at least one pre-stored asset data blocks in the database based on the time value and the space value of the modified asset data block.

In determining whether the asset data received in the request is present as at least one pre-stored asset data block in the database, the method comprises generating a new asset data block for the asset data received in the request if the asset data received in the request is not present as at least one pre-stored asset data block in the database. Further, the method comprises determining time value and space value of the new asset data block. Additionally, the method comprises dynamically linking the new asset data block to the at least one pre-stored asset data blocks in the database based on the time value and the space value of the new asset data block.

In generating the two dimensional asset data blocks comprising chain of the processed asset data blocks each linked across the time axis and the tree of the processed asset data blocks each linked across the space axis, the method comprises assigning a node to each of the asset data blocks based on the linking of the asset data to the one or more pre-stored asset data. Further, the method comprises generating a tree of nodes wherein each node in the tree represents the asset data block and wherein each asset data block is hierarchically linked to the at least one pre-stored asset data block based on the space value associated with each of the asset data blocks. The nodes are hierarchically linked with each other based on the asset space value associated with each of the asset data blocks. In an embodiment, this tree of nodes may represent block tree. Further, the method comprises simultaneously generating a chain of asset data blocks. Each asset data block in the chain is linked to the at least one pre-stored asset data block based on the time value associated with each of the asset data block. In an embodiment, this chain of asset data blocks may correspond to block chain.

In generating the tree of nodes, the method comprises identifying a base node of the tree based on a type of content of the asset data block. The base node represents one asset data block. In an embodiment, the type of content may comprises product or system configuration, terminal node of the tree that includes asset data blocks pertaining to product or system configuration.

Further, the method comprises generating hierarchical relationship between the identified base node and each of the other nodes stored in the database. Furthermore, the method comprises generating the tree of nodes starting from the base node. Each hierarchical level and position of nodes in the tree are classified based on the type of content of the asset data block.

Further, the method comprises providing access to one or more asset data blocks based on the privileges associated with the user of the one or more user devices. each user of the one or more user devices are allowed to access specific hierarchical level of nodes based on the privileges associated with the user of the one or more devices.

The method comprises publishing the generated two-dimensional asset data blocks to the users of the one or more user devices via a secured communication network. The users are authorized to access the asset data blocks based on privileges based on roles of the users.

The object of the present invention is also be achieved by a cloud computing system for managing asset data in an industrial network. The cloud computing system may comprise one or more processors and a memory coupled to the one or more processors. The memory comprises an asset data management module stored in the form of machine-readable instructions and executable by the one or more processors.

The asset data management module is configured for performing the method described above.

The object of the invention can also be achieved by a cloud computing environment for managing asset data in industrial network. The cloud computing environment comprising a system; and one or more user devices communicatively coupled to the system via a communication network. The one or more user devices comprises an asset data block handler module for handling asset data blocks.

The object of the invention can also be achieved by a computer-program product, having machine-readable instructions stored therein, that when executed by a processor, causes the processor to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
FIG 1 is a schematic representation of industrial network capable of managing asset data, according to an embodiment of the present invention;
FIG 2 is a schematic representation of a cloud computing environment capable managing asset data in an industrial network, according to another embodiment of the present invention
FIG 3 is a block diagram of a cloud computing system, such as those shown in FIG 1 and FIG. 2, in which an embodiment of the present invention can be implemented;
FIG 4 is a block diagram of an asset data management module at the cloud computing system, such as those shown in FIG 1 and FIG 2, in which an embodiment of the present invention can be implemented;
FIG 5 is a block diagram of an asset data block handler module at the user device, such as those shown in FIG. 2, in which an embodiment of the present invention can be implemented;
FIG 6 is a process flowchart illustrating an exemplary method of managing asset data in an industrial network, according to an embodiment of the present invention;
FIG 7 is a process flowchart illustrating an exemplary method of dynamically linking the asset data to one or more pre-stored asset data, according to an embodiment of the present invention;
FIG 8 is an exemplary schematic representation of generating a tree of nodes wherein each node in the tree represents the asset data block, according to an embodiment of the present invention;
FIG 9 is an exemplary schematic representation of generating a tree of nodes for exemplary product information in an industry, according to exemplary embodiment of the present invention;
FIG 10 is another exemplary schematic representation of generating a tree of nodes for exemplary product information in an industry, according to another exemplary embodiment of the present invention; and
FIG 11 is a graphical representation of a two-dimensional asset data block comprising a chain of the processed asset data blocks each linked across a time axis and a tree of the processed asset data blocks each linked across a space axis, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

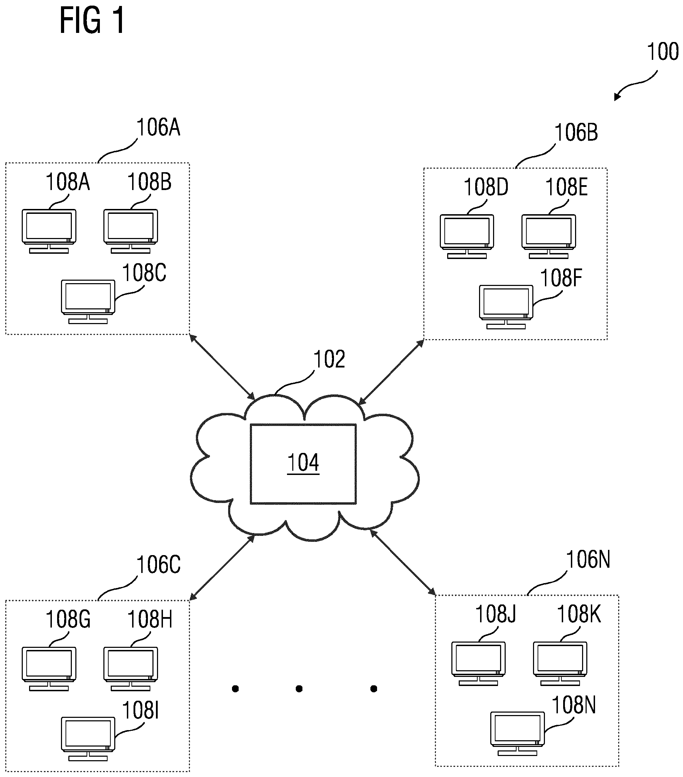

FIG 1 is a schematic representation of an industrial network 100 capable of managing asset data, according to an embodiment of the present invention. Particularly, FIG. 1 depicts a distributed architecture of various systems capable of managing asset data. FIG. 1 comprises one or more user devices 108A-N belonging to one or more organizations/enterprises 106A-N connected to a cloud computing system 102 via network. The cloud computing system 102 comprises an asset data management module 104 configured for managing asset data in the industrial network 100. In an embodiment, each of the organizations/enterprises 106A-N comprises one or more user devices 108A-N for managing asset data corresponding to the respective organization/enterprise business. Each user at the one or more user devices 108A-N are assigned specific privileges authorizing them to access specific asset data. These users are allowed to modify, add or delete the asset data for which they are entitled to have access on. In an embodiment, organization 106A has one or more user devices 108A-C. Each of these user devices 108A-C may have a specific purpose, and specific role defined. For example, the organization 106A may be a factory environment. Usually, the one or more user devices 108A-C in this organization 106A may perform tasks relevant to configuration data and the like. Similarly, organization 106B may be an inspecting authority which authenticates the data. Similarly, organization N and organization C may be end users or repair units which uses the asset data for maintenance purposes. Since, each of these organizations performing different roles are connected in a distributed manner, traceability of asset data becomes easier and faster. This process may require reduced residual risk, better accountability in incidence management, better management of warranties of products or assets, faster product approvals, faster vendor approvals and ease of date retrieval and transparency of asset data across distributed systems in the industrial network 100.

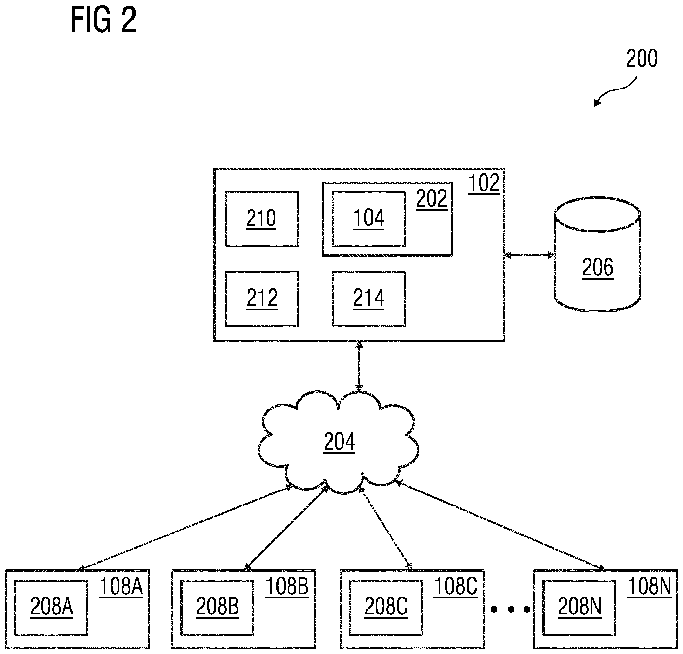

FIG 2 is a schematic representation of a cloud computing environment 200 capable of managing asset data in an industrial network such as industrial network 100, according to an embodiment of the present invention. Particularly, FIG 2 depicts a cloud computing system 102 which is capable of delivering cloud applications for managing asset data comprised in one or more user devices 108A-N. In an embodiment, the cloud computing environment 200 may be an industrial network 100 as referred in FIG. 1. As used herein, "cloud computing environment" refers to a processing environment comprising configurable computing physical and logical resources, for example, networks, servers, storage, applications, services, etc., and data distributed over the cloud platform 202. The cloud computing environment 200 provides on-demand network access to a shared pool of the configurable computing physical and logical resources. The one or more user devices 108A-N comprises an asset data block handler module 208A-N configured for handling asset data blocks. The asset data block handler module 208A-N is a client-side web application allowing the users of the user devices 108A-N to access, process asset data and publish the asset data at given point of time.

The cloud computing system 102 is connected to the one or more user devices 108AN via a network 204 (e.g., Internet). The cloud computing system 102 may be a public cloud, a private cloud, and/or a hybrid cloud configured to provide dedicated cloud services to its users. Although, FIG 2 illustrates the cloud computing system 102 connected to one or more user devices 108A-N, one skilled in the art can envision that the cloud computing system 102 can be connected to several user devices 108 located at different locations via the network 204.

The one or more user devices 108A-N can access the cloud computing system 102 for managing the asset data associated with an asset in the industrial network 100. In an embodiment, asset data comprises test reports/certificates, component data, serial numbers, type numbers, approvals, manufacturing information, specifications, versions, time-stamps & signatures, third party approvals/tests, vendor/sub-vendor information, commercial information. In an embodiment, the one or more user devices 108A-N comprises an engineering system capable of running an industrial automation application. The one or more user devices 108-N can be a laptop computer, desktop computer, tablet computer, smartphone and the like. The one or more user devices 108A-N can access cloud applications (such as providing asset data of the one or more asset(s)) via a web browser. Throughout the specification, the terms "one or more user devices 108A-N" and the term "user devices 108A-N" are used interchangeably. Also, each of the user(s) using the one or more user devices 108-N is associated with a defined privilege for accessing the asset data. The defined privileges may include geographical location(s) of the user, role of the user, version of the industrial automation application and the like. The defined privileges comprises read access, write access, read and write access, and read or write access.

The cloud computing system 102 comprises a cloud platform 202, an asset data management module 104, a server 210 including hardware resources and an operating system (OS), a network interface 212, application programming interfaces (APIs) 214 and a database 206. The network interface 212 enables communication between the cloud computing system 102, and the user devices 108-N. Also, the network interface 212 enables communication between the cloud computing system 102 and the user devices(s) 108A-N. The cloud interface (not shown in FIG 1) may allow the users at the one or more user device(s) 108A-N to access asset data stored at the cloud computing system 102 and perform one or more actions on the asset data as same instance. The server 210 may include one or more servers on which the OS is installed. The servers 210 may comprise one or more processors, one or more storage devices, such as, memory units, for storing data and machine-readable instructions for example, applications and application programming interfaces (APIs) 214, and other peripherals required for providing cloud computing functionality. The cloud platform 202 is a platform which enables functionalities such as data reception, data processing, data rendering, data communication, etc. using the hardware resources and the OS of the servers 210 and delivers the aforementioned cloud services using the application programming interfaces 214 deployed therein. The cloud platform 202 may comprise a combination of dedicated hardware and software built on top of the hardware and the OS.

The database 206 stores the information relating to the assets, users of the user devices 108A-N and the user devices(s) 108A-N. The database 206 is, for example, a structured query language (SQL) data store or a not only SQL (NoSQL) data store. The database 206 is configured as cloud-based database implemented in the cloud computing environment 200, where computing resources are delivered as a service over the cloud platform 202. The database 206, according to another embodiment of the present invention, is a location on a file system directly accessible by the asset data management module 104. The database 206 is configured to store asset data, user profile data, test results, simulation results, status messages, associated with the one or more asset(s), one or more simulation instances associated with a virtual asset, program update messages and the like. In a preferred embodiment, the database 206 may be a blockchain database which is a trusted and distributed database.

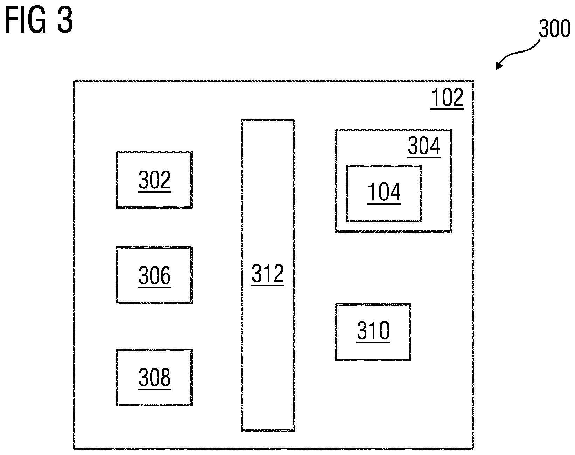

FIG 3 is a block diagram of a cloud computing system 102, such as those shown in FIG 1 and FIG. 2, in which an embodiment of the present invention can be implemented. In FIG 3, the cloud computing system 102 includes a processor(s) 302, an accessible memory 304, a storage unit 306, a communication interface 308, an input-output unit 310, and a bus 312.
The processor(s) 302, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 302 may also include embedded controllers, such as generic or programmable logic devices or arrays, application specific integrated circuits, single-chip computers, and the like.

The memory 304 may be non-transitory volatile memory and non-volatile memory. The memory 304 may be coupled for communication with the processor(s) 302, such as being a computer-readable storage medium. The processor(s) 302 may execute machine-readable instructions and/or source code stored in the memory 304. A variety of machine-readable instructions may be stored in and accessed from the memory 304. The memory 304 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 304 includes an asset data management module 104 stored in the form of machine-readable instructions on any of the above-mentioned storage media and may be in communication with and executed by the processor(s) 302.
When executed by the processor(s) 302, the asset data management module 104 causes the processor(s) 302 to manage asset data in an industrial network 100. In an embodiment, the asset data management module 104 causes the processor(s) 302 to receive a request for generating a two-dimensional asset data block from one or more user devices 108A-N. The request comprises asset data associated with an asset in an industrial network 100. Upon receiving the request, the asset data management module 104 causes the processor(s) 302 to authenticate the one or more user devices 108A-N based on predefined criteria stored in a database 206. The predefined criteria comprises privileges based on users roles and responsibility. e.g. Manufacturer will be entitled to create or modify data related to manufactured product, Customer will create data related to approvals, and the like.

In an embodiment, in authenticating the one or more user devices 108A-N based on predefined criteria stored in the database 206, the asset data management module 104 causes the processor(s) 302 to determine one or more privileges associated with a user of the one or more user devices 108A-N requesting to generate the two-dimensional asset blocks. Further, the asset data management module 104 causes the processor(s) 302 to authenticate the user of the one or more user devices 108A-N based on the determined one or more privileges associated with the user of the one or more user devices 108A-N.

The asset data management module 104 causes the processor(s) 302 to process the received asset data based on time value and a space value associated with the asset data. The time value of the asset data indicates the time instance at which the asset data is processed and the space value of the asset data indicates hierarchical relationship of the asset data with the one or more pre-stored asset data. In an embodiment, in processing the received asset data based on time value and a space value associated with the asset data, the asset data management module 104 causes the processor(s) 302 to encrypt the received asset data using a hash function and store the encrypted asset data in the database 206.

In an embodiment, in processing the received asset data based on the time value and the space value associated with the asset data, the asset data management module 104 causes the processor(s) 302 to dynamically link the asset data to one or more pre-stored asset data based on the time value associated with the asset data and the space value associated with the asset data.

In dynamically linking the asset data to one or more pre-stored asset data based on the time value associated with the asset data and the space value associated with the asset data, the asset data management module 104 causes the processor(s) 302 to determine whether the asset data received in the request is present as at least one pre-stored asset data block in the database 206. Further, the asset data management module 104 causes the processor(s) 302 to determine one or more modifications made to the asset data received in the request by comparing the asset data received in the request with corresponding pre-stored asset data block, if the asset data received in the request is present as the at least one pre-stored asset data block in the database 206. Further, the asset data management module 104 causes the processor(s) 302 to generate a modified asset data block based on the determined one or more modifications. Additionally, the asset data management module 104 causes the processor(s) 302 to determine time value and space value of the modified asset data block. Moreover, the asset data management module 104 causes the processor(s) 302 to dynamically link the modified asset data block to the other asset data blocks pre-stored in the database 206 based on the time value and the space value of the modified asset data block.

In determining whether the asset data received in the request is present as at least one pre-stored asset data block in the database 206, the asset data management module 104 causes the processor(s) 302 to generate a new asset data block for the asset data received in the request if the asset data received in the request is not present as at least one pre-stored asset data block in the database 206. Further, the asset data management module 104 causes the processor(s) 302 to determine time value and space value of the new asset data block. Further, the asset data management module 104 causes the processor(s) 302 to dynamically link the new asset data block to the at least one pre-stored asset data blocks in the database 206 based on the time value and the space value of the new asset data block.

Further, the asset data management module 104 causes the processor(s) 302 to generate a two-dimensional asset data block comprising a chain of the processed asset data blocks each linked across a time axis and a tree of the processed asset data blocks each linked across a space axis. In an embodiment,

In an embodiment, in generating the two dimensional asset data blocks comprising chain of the processed asset data blocks each linked across the time axis and the tree of the processed asset data blocks each linked across the space axis, the asset data management module 104 causes the processor(s) 302 to assign a node to each of the asset data blocks based on the linking of the asset data to the one or more pre-stored asset data. Further, the asset data management module 104 causes the processor(s) 302 to generate a tree of nodes. Each node in the tree represents the asset data block and wherein each asset data block is hierarchically linked to the at least one pre-stored asset data block based on the space value associated with each of the asset data blocks. Further, the asset data management module 104 causes the processor(s) 302 to simultaneously generate a chain of asset data blocks. Each asset data block in the chain is linked to the at least one pre-stored asset data block based on the time value associated with each of the asset data block.

In an embodiment, in generating the tree of nodes, the asset data management module 104 causes the processor(s) 302 to identify a base node of the tree based on type of content of the asset data block, wherein the base node represents one asset data block. Further, the asset data management module 104 causes the processor(s) 302 to generate hierarchical relationship between the identified base node and each of the other nodes stored in the database 206. Each hierarchical level of nodes in the tree are classified based on the type of content of the asset data block. Also, the asset data management module 104 causes the processor(s) 302 to generate the tree of nodes starting from the base node.

In an embodiment, the asset data management module 104 causes the processor(s) 302 to provide access to one or more asset data blocks based on the privileges associated with the user of the one or more user devices 108A-N. Each user of the one or more user devices 108A-N are allowed to access specific hierarchical level of nodes based on the privileges associated with the user of the one or more user devices 108A-N.

In an embodiment, the asset data management module 104 causes the processor(s) 302 to publish the generated two-dimensional asset data blocks to the users of the one or more user devices 108A-N via a secured communication network 204, wherein the users are authorized to access the asset data blocks.
The storage unit 306 is configured for storing the asset data blocks associated with one or more asset(s).

The communication interface 308 is configured for establishing communication sessions between the one or more user devices 108A-N and the cloud computing system 102. The communication interface 308 allows the one or more applications running on the user devices 108A-N to access and process the asset data into the cloud computing system 102. In an embodiment, the communication interface 308 interacts with the interface at the one or more user devices 108A-N for allowing the users to access the asset data and perform one or more actions on the asset data stored in the cloud computing system 102.

The input-output unit 310 may include input devices a keypad, touch-sensitive display, camera (such as a camera receiving gesture-based inputs), etc. capable of receiving one or more input signals, such as user commands to process asset data. Also, the input-output unit 310 may be a display unit for displaying a graphical user interface which visualizes the asset data and also displays the status information associated with each set of actions performed on the asset data. The set of actions may include data entry, data modification or data display. The bus 312 acts as interconnect between the processor 302, the memory 304, the storage unit 306 and the input-output unit 310.

Those of ordinary skilled in the art will appreciate that the hardware depicted in FIG 3 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a cloud computing system 102 as is unique to the present disclosure or necessary for an understanding of the present disclosure is depicted and described. The remainder of the construction and operation of the cloud computing system 102 may conform to any of the various current implementation and practices known in the art.

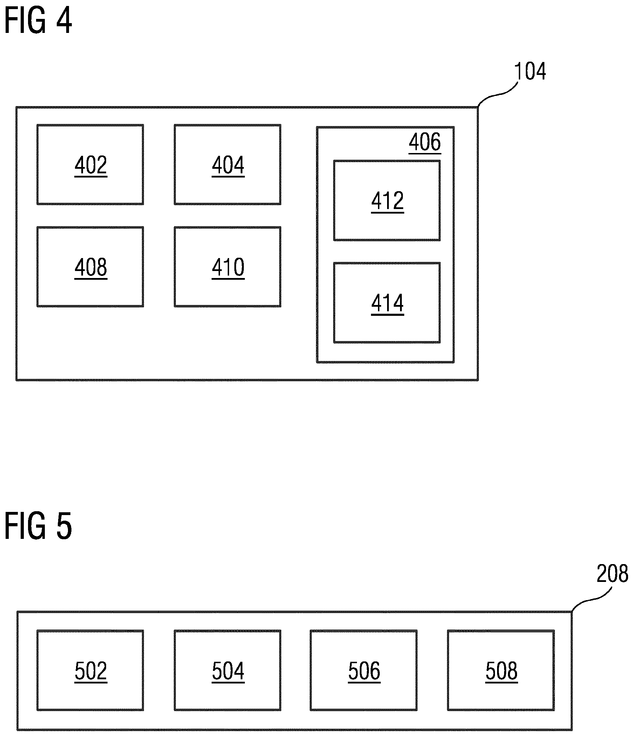

FIG 4 is a block diagram of an asset data management module 104 at the cloud computing system 102, such as those shown in FIG 1 and FIG 2, in which an embodiment of the present invention can be implemented. The asset data management module 104 comprises an authentication module 402, asset data processing module 404, two-dimensional asset data block generation module 406, an asset database 408 and a transaction handler 410. The two-dimensional asset data block generation module 406 comprises block chain generation module 412 and a block tree generation module 414.

The authentication module 402 is configured for authenticating, by the processor, the one or more user devices 108A-N based on predefined criteria stored in the database 206. The predefined criteria may comprises privileges based on users roles and responsibility. e.g. Manufacturer will be entitled to create or modify data related to manufactured product, Customer will create data related to approvals, and the like. In an embodiment, upon receiving a request for generation a two-dimensional asset data block from the one or more user devices 108A-N, the authentication module 402 is configured to determine one or more privileges associated with a user of the one or more user devices 108A-N requesting to generate the two-dimensional asset blocks. The one or more privileges associated with the user is role or profile based associated with the user. Every user registered with the cloud system 102 is assigned a user role and a user profile is generated for that user. This user profile is stored in the database 206. The user profile defines the content of asset data to which he has access and the role of the user is processing the asset data. For example, the role of the user may be administrative role, developer, manager, product owner and the like. Each user role is mapped with a set of permissions or privileges. These permissions or privileges comprises privileges based on user roles and responsibility. e.g. Manufacturer will be entitled to create or modify data related to manufactured product, Customer will create data related to approvals, and the like.

In an exemplary embodiment, if a user is having a role as a product owner, he has a privilege of reading/writing/modifying the content related to product he owns (product may be the asset in such a case). In other case, a person who is having a sales executive role may not have access to complete information associated with the product and have limited product information required for his role.

In an embodiment, the authentication module 402 is configured for authenticating the user of the one or more user devices 108A-N based on the determined one or more privileges associated with the user of the one or more user devices 108A-N. Upon successful authentication, the user profile information is transmitted to the asset data processing module 404.

Further, the authentication module 402 is configured for providing access to one or more asset data blocks based on the privileges associated with the user of the one or more user devices 108A-N. Each user of the one or more user devices 108A-N are allowed to access specific hierarchical level of nodes based on the privileges associated with the user of the one or more devices.

The asset data processing module 404 is configured for processing the received asset data based on time value and a space value associated with the asset data. The time value of the asset data indicates the time instance at which the asset data is processed and the space value of the asset data indicates hierarchical relationship of the asset data with the one or more pre-stored asset data. For every asset data stored in the cloud computing system 102, there exists a time stamp information associated with the asset data. The time stamp information associated with the asset data indicates the time instance at which the asset data is being created. The time stamp information also indicates originator information who initiated the generation of the asset data. For example, the time value of the asset data may include time instance coordinates mapped over a time axis, defining one dimension. The time axis may be Z axis, for example and the time value may be Z coordinates mapped across the Z axis.

Further, for every asset data stored in the cloud computing system 102 there also exists a space value associated with the asset data. In an embodiment, space value has a hierarchical level as well as position, in a way , X,Y coordinates. In an embodiment, each asset data is classified into various categories of asset data based on the content of the asset data. For example, if the content of the asset data is limited to basic device or component level information, then the asset data is categorized as basic asset data level. For example, level 0. Similarly, if the content of the asset data has more information on product level derived from the components/devices at the basic asset data level (level 0), then the asset data is categorized into sub-product level. For example, level 1. Further, if the content of the asset data has more information on the system level derived from either the components/devices at the basic asset data level (level 0) or at the sub-product level (level 1), then the asset data is categorized into the product or system level. For example, level 2. Depending upon the number of levels, the asset data is categorized into various levels. In this example, level 0 may be lowest in hierarchy and level 2 being the highest. In an alternate embodiment, this may be true for vice versa. Each of these levels containing the categorized asset data is generated in a hierarchical manner. Hence, each level indicates hierarchical level of the asset data.

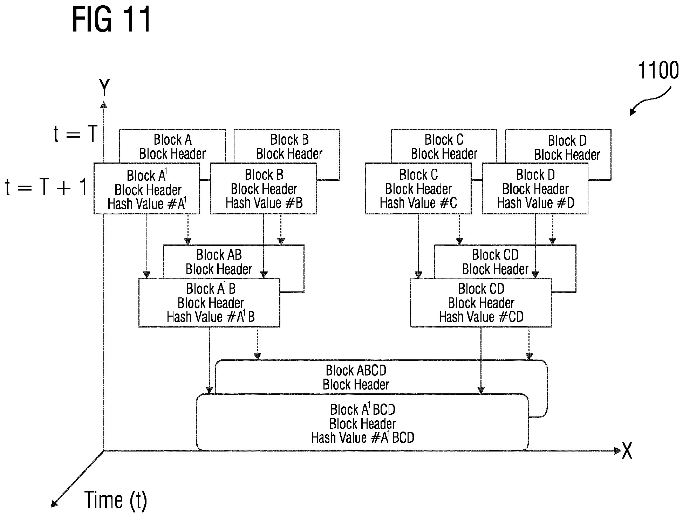

The space value indicates the positional value of the asset data in the hierarchical level. For example, consider that a tree of asset data block comprising N hierarchical levels and at each hierarchical level there are 1 to N asset data block. In an embodiment, number of hierarchical levels and number of blocks in any level are not limited or related mathematically. Therefore number of asset data blocks in a hierarchy can be 1 to N. In an embodiment, the number of asset data blocks may or may not be equal to the number of hierarchical levels. In this example, the space value of the asset data, for example, 4:1 indicates that the asset data block belongs to hierarchical level 4 and position 1 in the chain of asset data blocks(for example, first block in hierarchical level 4). This is more elaborated in FIG. 11.

Specifically, in an embodiment, the asset data processing module 404 is configured for encrypting the received asset data using a hash function. In an embodiment. The asset data processing module 404 uses standard block chain hash function to encrypt the received asset data. Further, the asset data processing module 404 is configured for storing the encrypted asset data in the database 206.

Further, in processing the received asset data based on the time value and the space value associated with the asset data, the asset data processing module 404 is configured for dynamically linking the asset data to one or more pre-stored asset data based on the time value associated with the asset data and the space value associated with the asset data. In order to achieve this, the asset data processing module 404 first determines whether the asset data received in the request is present as at least one pre-stored asset data block in the database 206. Further, the asset data processing module 404 determines one or more modifications made to the asset data received in the request by comparing the asset data received in the request with corresponding pre-stored asset data block, if the asset data received in the request is present as the at least one pre-stored asset data block in the database 206. Any standard comparison mechanisms may be used. The one or more modifications may comprises replacement of component having serial number A by serial number Al and changing corresponding asset data block and tree structure. Another modification comprises change of software version of a controller module from 1.0 to 1.1 and changing corresponding asset data block and tree structure.

In an exemplary embodiment, if any modifications are made to the asset data, then automatically a modified asset data block is generated based on the determined one or more modifications. For example, if a component parameter has been changed, then this accounts for modification, and the modified asset data block having this modified component parameter is generated. Further, the asset data processing module 404 is configured for determining the time value and the space value of the modified asset data block. For example, the modified time value indicates the changed time stamp information of the asset data and changed originator information. In specific, if the component parameter is changed on XX date and at XX time by X user, then this time stamp information is converted into a time value and is mapped on the time axis Z. This assigns a position in one dimension for the modified asset data block. Similarly, the modified space value provides a position in another dimension for the modified asset data block. That is, the modified space value is generated based on modified hierarchical level or relationship of the asset data block with respect to other existing/pre-stored asset data blocks. For example, the component parameter is categorized as basic asset data level, level 0 in the hierarchy. Then any modifications done to this category of asset data, the space value may indicate position at the first or basic hierarchical level.

Further, the asset data processing module 404 is configured for dynamically linking the modified asset data block to the other asset data blocks pre-stored in the database 206 based on the time value and the space value of the modified asset data block. Once the position of the modified asset data block is known with the modified space value and the time value, the modified asset data block is dynamically linked to the other asset blocks in the two dimensions, time dimension and the space dimension.

In an alternate embodiment, if it is determined that the asset data received in the request is not present as at least one pre-stored asset data block in the database 206, then the asset data processing module 404 is configured for generating a new asset data block for the asset data received in the request if the asset data received in the request is not present as at least one pre-stored asset data block in the database 206. For example, if a user requests to add a new component to a product based on a customer requirement, then if it determined that such new component is not already present at the database 206, then a new asset data block is generated. The new asset data block comprises new asset data, new hash function, new timestamp and originator information and the like. With this new asset data block, the asset data processing module 404 is configured for determining time value and space value of the new asset data block. This is achieved by parsing the asset data comprised in the new asset data block and parsing the request information received from the user of the user devices 108A-N. Further, the asset data processing module 404 is configured for dynamically linking the new asset data block to the at least one pre-stored asset data blocks in the database 206 based on the time value and the space value of the new asset data block. This step determines the position of the new asset data block in both time and space dimensions.

The asset data processing module 404 provides the position information associated with very asset data block across the two dimensions, i.e., time and space, and whether asset data block is new or modified, to the two-dimensional asset data block generation module 406.

The two-dimensional asset data block generation module 406 comprises block chain generation module 412 and a block tree generation module 414. The block chain generation module 412 define one dimension and the block tree generation module 414 defines the second dimension of the asset data blocks.

In general, the two-dimensional asset data block generation module 406 is configured for generating a two-dimensional asset data block comprising a chain of the processed asset data blocks each linked across a time axis and a tree of the processed asset data blocks each linked across a space axis. In an embodiment, the tree of the processed asset data blocks are linked also across the time axis. In specific, the block chain generation module 412 is configured for generating a chain of the processed asset data blocks each linked across a time axis and the block tree generation module 414 is configured for generating a tree of the processed asset data blocks each linked across a space axis. In an embodiment, the tree of the processed asset data blocks are linked also across the time axis.

In a preferred embodiment, in generating the two dimensional asset data blocks comprising chain of the processed asset data blocks each linked across the time axis and the tree of the processed asset data blocks each linked across the space axis, the two dimensional asset data block generation module 406 is configured for assigning a node to each of the asset data blocks based on the linking of the asset data to the one or more pre-stored asset data. For example, each asset data block is assigned a node based on the position of the asset data block in time dimension as well as in the space dimension. This assigned nodes are then fed to the block chain generation module 412 and the block tree generation module 414 for further processing as described below.
The block tree generation module 414 is configured for generating a tree of nodes where each node in the tree represents the asset data block. Also, each asset data block is hierarchically linked to the at least one pre-stored asset data block based on the space value associated with each of the asset data blocks. For example, each asset data block, which is a node in the tree structure is hierarchically linked to each other nodes. Specifically, in generating the tree of nodes, the block tree generation module 414 is configured for first identifying a base node of the tree based on type of content of the asset data block. The base node represents one asset data block. This base node may not be always present at the root of the tree structure. Instead, the base node may arise any where in the hierarchical level of the tree structure. For example, a base node may be at hierarchical level 2 and not at the root node for example, hierarchical level 0. Also, the tree structure of the asset data blocks are generated in any direction from the base node. For example, if the base node is at the middle of the tree structure, then there might be further nodes linked to the base node either on the left hand side of the base node or on the right hand side of the base node, depending upon the hierarchical level. However, such direction should always be vertical direction. Additionally, each hierarchical level of nodes in the tree are classified based on the type of content of the asset data block. The type of the content of asset data block may comprises product or system configuration, terminal node of the tree that includes asset data blocks pertaining to product or system configuration.

Once the base node is identified, the block tree generation module 414 is configured for generating hierarchical relationship between the identified base node and each of the other nodes stored in the database 206. Any standard artificial neural network mechanisms may be used for generating the hierarchical relationship between the identified base node and each of the other nodes stored in the database 206. Finally, the block tree generation module 414 is configured for generating the tree of nodes starting from the base node. The tree structure thus formed by nodes linked in space dimension has specific time value. Also, such tree structure formed at that specific time value shall be linked to new or modified tree structure having modified time value and modified space value. For example, in a scenario where asset block AB is modified to asset data block AB' at time T'. Then, entire new tree structure is generated including this modified block AB at time instance T'. This new tree structure is now linked to old tree structure comprising the un-modified asset data block AB at time instance T.

The block chain generation module 412 is configured for simultaneously generating a chain of asset data blocks. Each asset data block in the chain is linked to the at least one pre-stored asset data block based on the time value associated with each of the asset data block.

In an embodiment, the output of the block tree generation module 414 and the block chain generation module 412 is outputted to the user device 108A-N via the two-dimensional asset data block generation module 406.

Further, the two-dimensional asset data block generation module 406 is configured for publishing the generated two-dimensional asset data blocks to the users of the one or more user devices 108A-N via a secured communication network 204. The users are authorized to access the asset data blocks.

The asset database 408 is configured for storing the two-dimensional asset data blocks, specifically the block chain and block tree of asset data blocks, user privileges, user profiles, asset data, and the like.

The transaction handler 410 is configured for handling transactions between the user devices 108A-N. In an embodiment, transactions taking place at an instance of time are combined using a hash function to reach a Merkle root which forms a Block Header. Such block header in itself forms an asset data block. These asset data blocks are linked in the course of time to form a block chain. This is explained under block chain generation module 412. Further, these asset data blocks are bound by predefined hierarchy in space dimension which forms a block tree. This is explained under block tree generation module 414. A "transaction", as used herein, may refer to any sequence of data. In other words, the semantics of a transaction depends on how the transaction is interpreted by a node when referring to the contents of the transaction.

FIG 5 is a block diagram of an asset data block handler module 208A-N at the user device 108A-N, such as those shown in FIG. 2, in which an embodiment of the present invention can be implemented. In FIG. 5, the asset data block handler module 208A-N comprises a user profile handler module 502, a user device end transaction handler 504, a block validation module 506 and a block generation module 508.
The user profile handler module 502 is configured for determining user privileges associated with an asset data block stored in the database 206. The user profile handler module 502 is updated and is in synchronous with the authentication module 402 in the cloud computing system 102.

The user device end transaction handler module 504 is configured for handling transactions at the user devices 108A-N end. When a new transaction is to be added to the block chain or block tree, one of the user devices 108A-N, for example user device 108A, creates a transaction. The transaction is then passed on or exchanged among the user devices 108B-N in a peer-to-peer manner. The other user devices 108B-N upon seeing the new block, verify the new block using standard protocols and add the new block to their respective copies of the blockchain and the block tree.

The block validation module 506 is configured for validating a request received from peer user devices 108A-N for creating a new asset data block or for modifying the existing asset data block stored in the database 206. The block validation module 506 is configured for performing hash functions and encryptions on the asset data block using any known mechanisms in the art.

The block generation module 508 is configured for generating a local copy of the asset data blocks generated at the cloud computing system 102. For example, the two-dimensional asset data blocks comprising the chain of asset data blocks and a tree of asset data blocks are replicated at the user device 108A-N and is stored in the memory of the user device 108A-N.

Those skilled in the art will recognize that, for simplicity and clarity, the full structure and operation of all data processing systems suitable for use with the present disclosure is not being depicted or described herein. Instead, only so much of a user device 108A-N as is unique to the present disclosure or necessary for an understanding of the present disclosure is depicted and described. The remainder of the construction and operation of the user device 108A-N may conform to any of the various current implementation and practices known in the art. For example, the user devices 108A-N may comprise one or more processors, memory, communication interface and/or input-output unit for carrying out the embodiments described in the present invention.

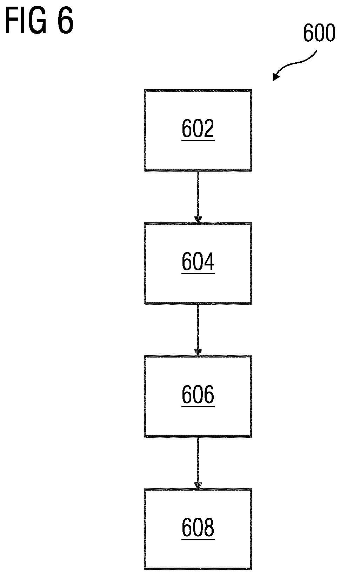

FIG 6 is a process flowchart illustrating an exemplary method 600 of managing asset data in an industrial network 100, according to an embodiment of the present invention. At step 602, a request for generating a two-dimensional asset data block is received from one or more user devices 108A-N. The request comprises asset data associated with an asset in an industrial network 100. At step 604, the one or more user devices 108A-N are authenticated based on predefined criteria stored in a database 206. Specifically, the one or more privileges associated with a user of the one or more user devices 108A-N requesting to generate the two-dimensional asset blocks is determined. Further, the user of the one or more user devices 108A-N is authenticated based on the determined one or more privileges associated with the user of the one or more user devices 108A-N.

At step 606, the received asset data is processed based on time value and a space value associated with the asset data. The time value of the asset data indicates the time instance at which the asset data is processed and the space value of the asset data indicates hierarchical relationship of the asset data with the one or more pre-stored asset data. Specifically, the received asset data is encrypted using a hash function and the encrypted asset data is stored in the database 206. Further, the asset data is dynamically linked to one or more pre-stored asset data based on the time value associated with the asset data and the space value associated with the asset data.

At step 608, a two-dimensional asset data block comprising a chain of the processed asset data blocks each linked across a time axis and a tree of the processed asset data blocks each linked across a space axis is generated. In an embodiment, the tree of the processed asset data blocks are linked also across the time axis. Specifically, a node is assigned to each of the asset data blocks based on the linking of the asset data to the one or more pre-stored asset data. Further, a tree of nodes is generated. Each node in the tree represents the asset data block and each asset data block is hierarchically linked to the at least one pre-stored asset data block based on the space value associated with each of the asset data blocks. In an embodiment, in generating the tree of nodes, first a base node of the tree is identified based on type of content of the asset data block. The base node represents one asset data block. Further, hierarchical relationship between the identified base node and each of the other nodes stored in the database 206 is generated. Furthermore, the tree of nodes starting from the base node is generated.

Further, a chain of asset data blocks is simultaneously generated. Each asset data block in the chain is linked to the at least one pre-stored asset data block based on the time value associated with each of the asset data block. In an embodiment, each asset data block in the chain is also dynamically linked to the at least one pre-stored asset data block based on the space value.

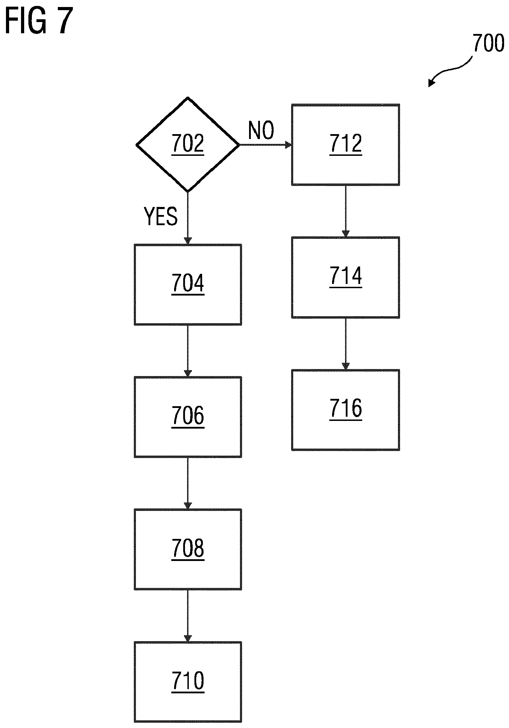

FIG 7 is a process flowchart illustrating an exemplary method 700 of dynamically linking the asset data to one or more pre-stored asset data, according to an embodiment of the present invention. At step 702, it is determined whether the asset data received in the request is present as at least one pre-stored asset data block in the database 206. If the asset data received in the request is present as the at least one pre-stored asset data block in the database 206, then at step 704, it is further determined whether one or more modifications made to the asset data received in the request by comparing the asset data received in the request with corresponding pre-stored asset data block. At step 706, a modified asset data block is generated based on the determined one or more modifications. At step 708, the time value and space value of the modified asset data block is determined. At step 710, the modified asset data block is dynamically linked to the other asset data blocks pre-stored in the database 206 based on the time value and the space value of the modified asset data block.

Alternatively, if the asset data received in the request is not present as at least one pre-stored asset data block in the database 206, then at step 712, a new asset data block for the asset data received in the request is generated. At step 714, the time value and space value of the new asset data block is determined. At step 716, the new asset data block is dynamically linked to the at least one pre-stored asset data blocks in the database 206 based on the time value and the space value of the new asset data block.

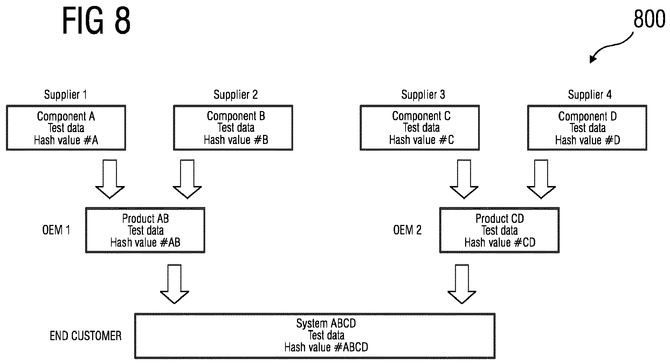

FIG 8 is an exemplary schematic representation 800 of generating a tree of nodes wherein each node in the tree represents the asset data block, according to an embodiment of the present invention. In FIG. 8, a block tree representing an asset data blocks at various level of hierarchy for various user roles is depicted. For example, for an end product or system ABCD, there are three hierarchical levels defined. First at the component level which is hierarchical level 0. Next at the intermediate product level, which is hierarchical level 1 and last at the end product or system level which is hierarchical level 2. Each user subscribed for this end product ABCD has specific access provided to them. For example, the suppliers of components A and B are having access only to the hierarchical level 0 and not to other levels. This means that the Suppliers are having privileges to manage component data.

Similarly, the OEM 1 may have access only to the hierarchical level 1 as they are responsible for handling data related to asset-product AB, for example. This means that OEM 1 are having privileges to manage product AB data. They are allowed to create any blocks at this hierarchical level, upload or download this specific asset data and share this specific asset data (product AB data) among other OEMs at this hierarchical level (level 1).

Similarly, the End customers may have access only to the hierarchical level 2 as end customers are responsible for handling data related to asset-system ABCD, for example. This means that end customer is having privileges to manage the system ABCD data. They are allowed to create any blocks at this hierarchical level, upload or download this specific asset data at this hierarchical level (level 2).

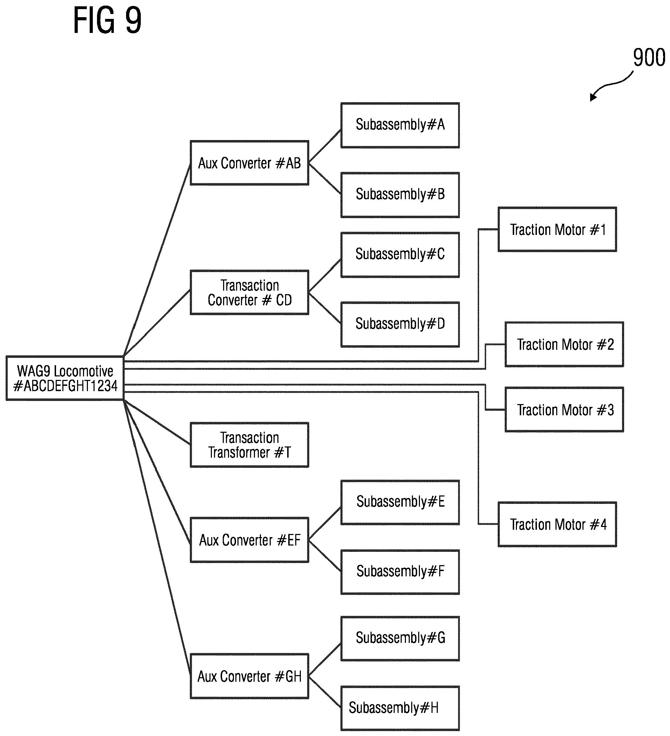

FIG 9 is an exemplary schematic representation 900 of generating a tree of nodes for exemplary product information in an industry, according to exemplary embodiment of the present invention. In FIG. 9, an exemplary block tree for a locomotive system is disclosed. Consider that a complete set of electrical equipment is to be supplied to an End Customer for a WAG9 locomotive. Such Locomotive comprises four traction motors, two auxiliary converters, two traction converters and a traction transformer. For each component and sub-component, asset data blocks are generated and are dynamically linked with the end product WAG9 Locomotive which may be the root node. Hence, for each of these blocks, after the corresponding users are authenticated, a specific time value and a space value associated with each asset data block is determined. Then, based on the time value and the space value of each of these asset data blocks, a chain of asset data blocks is generated based on the time value and a tree of asset data blocks is generated based on the space value. Specifically, if for example, asset data blocks traction motors 1, 2, 3 and 4 are generated at say time instance T, then T shall be the time value based on which the chain of asset data blocks is generated. Similarly, of for example, the asset data blocks traction motors 1, 2,3 and 4 are related to 'basic' type of asset data content, then these asset data blocks are assigned the hierarchical level 0. This hierarchical level shall be the space value based on which the tree of asset data blocks is generated.

In an embodiment, if any modification is required to any of these asset data blocks, the transaction has to be validated across multiple users handling the asset data blocks. Also, if such modified asset data block is generated, then a modified time value and a modified space value accordingly is generated. Based on this modified space value and the modified time value, the modified asset data block is dynamically linked to other existing asset data blocks and a two-dimensional asset data block comprising block chain and block tree is generated.

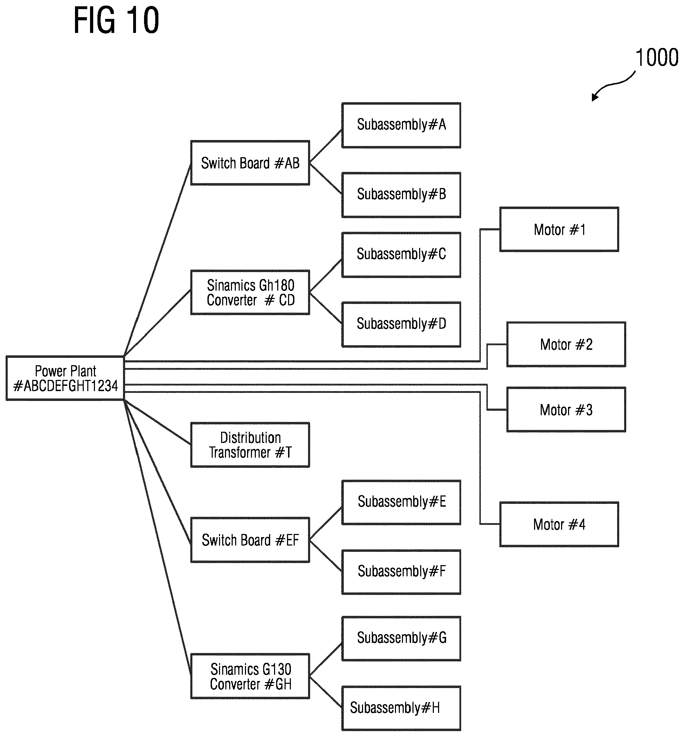

FIG 10 is another exemplary schematic representation 1000 of generating a tree of nodes for exemplary product information in an industry, according to another exemplary embodiment of the present invention. In FIG. 10, an exemplary block tree for a powerplant is disclosed. Consider that a complete set of electrical equipment to be supplied to an end customer for a power plant. Such powerplant comprises switchgear panels, medium voltage drives, LV G130 drives, and medium and low voltage motors. For each component and sub components, asset data blocks are generated and dynamically linked to the end product powerplant which may be the root node. Hence, for each of these blocks, after the corresponding users are authenticated, a specific time value and a space value associated with each asset data block is determined. Then, based on the time value and the space value of each of these asset data blocks, a chain of asset data blocks is generated based on the time value and a tree of asset data blocks is generated based on the space value. Specifically, if for example, asset data blocks motors 1, 2, 3 and 4 are generated at say time instance T, then T shall be the time value based on which the chain of asset data blocks is generated. Similarly, of for example, the asset data blocks motors 1, 2,3 and 4 are related to 'basic' type of asset data content, then these asset data blocks are assigned the hierarchical level 0. This hierarchical level shall be the space value based on which the tree of asset data blocks is generated.

In an embodiment, if any modification is required to any of these asset data blocks, the transaction has to be validated across multiple users handling the asset data blocks. Also, if such modified asset data block is generated, then a modified time value and a modified space value accordingly is generated. Based on this modified space value and the modified time value, the modified asset data block is dynamically linked to other existing asset data blocks and a two-dimensional asset data block comprising block chain and block tree is generated.

FIG 11 is a graphical representation 1100 of a two-dimensional asset data block comprising a chain of the processed asset data blocks each linked across a time axis and a tree of the processed asset data blocks each linked across a space axis, according to an embodiment of the present invention. In FIG. 11, generation of a block chain as well as generation of block tree is explained. Specifically, FIG. 11 illustrates a scenario when there is a modification made to one of the asset data blocks, for example asset data block A' at time t=T+ 1. In such a scenario, a modified asset data block A' is generated. This modified asset data block A' comprises modified time value (t=T+ 1) and modified space value. Based on the modified time value and the modified space value, the modified asset data block A' is dynamically linked to other existing asset data blocks, for example block B, block A'B and the like and a tree of asset data blocks comprises this modified asset data blocks is generated. This modification may be a product or system configuration change in case of a valid component replacement. Due to this modification to the existing asset data block, a new asset data block tree structure is generated and is linked to the previous existing block tree structure, in this case tree at the instance T. This is depicted in FIG. 11 where the block tree at a time instant t=T is linked to a modified block tree at a time instant t=T+ 1.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

## Claims

1. A method for managing asset data in an industrial network (100) comprising:
receiving, by a processor (302), a request for generating a two-dimensional asset data block from one or more user devices (108A-N), wherein the request comprises asset data associated with an asset in an industrial network (100);
authenticating, by the processor (302), the one or more user devices (108A-N) based on predefined criteria stored in a database (206);
processing, by the processor (302), the received asset data based on time value and a space value associated with the asset data, wherein the time value of the asset data indicates the time instance at which the asset data is processed and the space value of the asset data indicates hierarchical relationship of the asset data with the one or more pre-stored asset data; and
generating, by the processor (302), a two-dimensional asset data block comprising a chain of the processed asset data blocks each linked across a time axis and a tree of the processed asset data blocks each linked across a space axis.

2. The method according to claim 1, wherein authenticating the one or more user devices (108A-N) based on predefined criteria stored in the database (206) comprises:
determining one or more privileges associated with a user of the one or more user devices (108A-N) requesting to generate the two-dimensional asset blocks; and
authenticating the user of the one or more user devices (108A-N) based on the determined one or more privileges associated with the user of the one or more user devices (108A-N).

3. The method according to claim 1, wherein processing the received asset data based on time value and a space value associated with the asset data comprises:
encrypting the received asset data using a hash function; and
storing the encrypted asset data in the database (206).

4. The method according to claim 1 or 3, wherein processing the received asset data based on the time value and the space value associated with the asset data comprises:
dynamically linking the asset data to one or more pre-stored asset data based on the time value associated with the asset data and the space value associated with the asset data.

5. The method according to claim 4, wherein dynamically linking the asset data to one or more pre-stored asset data based on the time value associated with the asset data and the space value associated with the asset data comprises:
determining whether the asset data received in the request is present as at least one pre-stored asset data block in the database (206);
determining one or more modifications made to the asset data received in the request by comparing the asset data received in the request with corresponding pre-stored asset data block, if the asset data received in the request is present as the at least one pre-stored asset data block in the database (206);
generating a modified asset data block based on the determined one or more modifications;
determining time value and space value of the modified asset data block; and
dynamically linking the modified asset data block to the other asset data blocks pre-stored in the database (206) based on the time value and the space value of the modified asset data block.

6. The method according to claim 5, wherein determining whether the asset data received in the request is present as at least one pre-stored asset data block in the database (206) comprises:
generating a new asset data block for the asset data received in the request if the asset data received in the request is not present as at least one pre-stored asset data block in the database (206);
determining time value and space value of the new asset data block; and
dynamically linking the new asset data block to the at least one pre-stored asset data blocks in the database (206) based on the time value and the space value of the new asset data block.

7. The method according to claims 1 or 4, wherein generating the two-dimensional asset data blocks comprising chain of the processed asset data blocks each linked across the time axis and the tree of the processed asset data blocks each linked across the space axis comprises:
assigning a node to each of the asset data blocks based on the linking of the asset data to the one or more pre-stored asset data;
generating a tree of nodes wherein each node in the tree represents the asset data block and wherein each asset data block is hierarchically linked to the at least one pre-stored asset data block based on the space value associated with each of the asset data blocks; and
simultaneously generating a chain of asset data blocks, wherein each asset data block in the chain is linked to the at least one pre-stored asset data block based on the time value associated with each of the asset data block.

8. The method according to claim 5, wherein generating the tree of nodes comprises:
identifying a base node of the tree based on type of content of the asset data block, wherein the base node represents one asset data block;
generating hierarchical relationship between the identified base node and each of the other nodes stored in the database (206);
generating the tree of nodes starting from the base node.

9. The method according to claim 1, further comprising:
providing access to one or more asset data blocks based on the privileges associated with the user of the one or more user devices (108A-N).

10. The method according to claim 1, wherein each hierarchical level of nodes in the tree are classified based on the type of content of the asset data block.

11. The method according to claim 1, wherein each user of the one or more user devices (108A-N) are allowed to access specific hierarchical level of nodes based on the privileges associated with the user of the one or more devices (108A-N).

12. The method according to claim 1, further comprising:
publishing the generated two-dimensional asset data blocks to the users of the one or more user devices (108A-N) via a secured communication network (204), wherein the users are authorized to access the asset data blocks.

13. A cloud computing system (102) for managing asset data in an industrial network (100) comprising:
one or more processor(s) (302); and
a memory (304) coupled to the one or more processor (s)(302), wherein the memory (304) comprises an asset data management module (104) stored in the form of machine-readable instructions executable by the one or more processor(s) (302), wherein the asset data management module (104) is capable of performing a method according to any of the claims 1-12.

14. A cloud computing environment (100, 200) comprising:
a system (102) claimed in claim 13; and
one or more user devices (108A-N) communicatively coupled to the system (102) via a communication network (204), wherein the one or more user devices (108A-N) comprises asset data block handler module (208A-N) for handling asset data blocks.

15. A computer-program product, having machine-readable instructions stored therein, that when executed by a processor(s) (302), cause the processor(s) (302) to perform method steps according to any of the claims 1-12.
